# EUROPEAN PATENT APPLICATION

(11) **EP 4 503 511 A1**
(43) Date of publication of application: **05.02.2025**
(21) Application number: 24189106.8
(22) Date of filing: 17.07.2024
(51) Int. Cl.: H04L 9/32, H04L 9/08, G06F 7/58

(54) **ACTIVE TRANSISTOR RANDOM NUMBER GENERATOR (RNG) CIRCUIT WITH MEMS ENTROPY**

(30) Priority: 01.08.2023 US 202363516949 P; 10.05.2024 US 202418661437
(71) Applicant: Honeywell International Inc., Charlotte, NC 28202 (US)
(72) Inventor: TUCKER, James L., Charlotte, 28202 (US)
(74) Representative: Haseltine Lake Kempner LLP

(57) **Abstract**

Systems and methods for an active transistor RNG circuit with MEMS entropy are described herein. In one example, an RNG circuit includes one or more MEMS structures configured to provide an output, wherein the output includes active oscillations, charge, resistance, capacitance, and/or inductance values. The RNG circuit further includes active transistor RNG circuitry communicatively coupled to the one or more MEMS structures. The active transistor RNG circuitry is configured to generate a random number output based on the output by the one or more MEMS structures. The random number output generated by the active transistor RNG circuitry is an output of the RNG circuit.

## Description

### CROSS-REFERENCE TO RELATED APPLICATIONS

This application claims priority to U.S. Provisional Application No. 63/516,949, filed on August 1, 2023, and titled "DUAL USE MICROELECTROMECHANICAL SYSTEM (MEMS) DEVICE," the contents of which are incorporated by reference herein in their entirety.

This application is related to: United States Patent Application serial number 18/661,373 (attorney docket number H232672-US2) entitled "DUAL USE MICROELECTROMECHANICAL SYSTEM (MEMS) DEVICE" filed on even date herewith; United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE" filed on even date herewith; United States Patent Application serial number 18/661,416 (attorney docket number H233693-US) entitled "MEMS BASED PUF FOR MECHANICAL TRUST EXTENSION" filed on even date herewith; United States Patent Application serial number 18/661,426 (attorney docket number H233694-US) entitled "ACTIVE TRANSISTOR PHYSICAL UNCLONABLE FUNCTION (PUF) CIRCUIT WITH MEMS UNIQUENESS" filed on even date herewith; all of which are incorporated herein by reference in their entirety.

### BACKGROUND

Systems that can provide high quality sources of randomness are needed for cryptography. The random sources in these systems are ideally low-power, compact, and provide high-quality randomness. Random numbers are used to improve the security of cryptographic network operations by ensuring that communication sessions are non-repeating and unpredictable.

### SUMMARY

In some aspects, a random number generator (RNG) circuit is described herein. The RNG circuit includes one or more micro-electromechanical (MEMS) structures configured to provide an output, wherein the output includes active oscillations, charge, resistance, capacitance, and/or inductance values. The RNG circuit further includes active transistor RNG circuitry communicatively coupled to the one or more MEMS structures. The active transistor RNG circuitry is configured to generate a random number output based on the output provided by the one or more MEMS structures. The random number output generated by the active transistor RNG circuitry is an output of the RNG circuit.

In some aspects, a device is described herein. The device includes a random number generator (RNG) circuit. The RNG circuit includes micro-electromechanical (MEMS) structures configured to output active oscillations, charge, resistance, capacitance, and/or inductance values. The RNG circuit further includes active transistor RNG circuitry communicatively coupled to the MEMS structures. The active transistor RNG circuitry is configured to generate a random number output of the RNG circuit based on the active oscillations, charge, resistance, inductance, and/or capacitance values output by the one or more MEMS structures. The device further includes one or more additional circuits configured to utilize the random number output for one or more cryptographic processes.

In some aspects, a system is described herein. The system includes a plurality of devices configured to communicate with each other over a network. Each device of the plurality of devices includes a random number generator (RNG) circuit. The RNG circuit includes micro-electromechanical (MEMS) structures configured to outputs, wherein the outputs include active oscillations, charge, resistance, capacitance, and/or inductance values. The active transistor RNG circuitry is configured to generate a random number output for the RNG circuit based on the outputs by the MEMS structures. Each device of the plurality of devices further includes one or more additional circuits configured to utilize the random number output for one or more cryptographic processes in communicating with other devices over the network.

### BRIEF DESCRIPTION OF THE DRAWINGS

Understanding that the drawings depict only some embodiments and are not therefore to be considered limiting in scope, the exemplary embodiments will be described with additional specificity and detail using the accompanying drawings, in which:
FIGS. 1A-1B are block diagrams of an example random number generator (RNG) circuit that includes MEMS structure(s) and active transistor RNG circuitry;
FIGS. 2A-2C are diagrams of example configurations of an RNG circuit that includes MEMS structure(s) and active transistor circuitry based on different fabrication techniques; and
FIG. 3 is a block diagram of an example system.

In accordance with common practice, the various described features are not drawn to scale but are drawn to emphasize specific features relevant to the example embodiments.

### DETAILED DESCRIPTION

In the following detailed description, reference is made to the accompanying drawings that form a part hereof, and in which are shown by way of illustration specific illustrative embodiments. However, it is to be understood that other embodiments may be utilized, and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

The examples described herein include a random number generator (RNG) circuit that includes one or more micro-electromechanical machine systems (MEMS) structures and active transistor RNG circuitry that utilizes one or more MEMS structures to provide a source of entropy. The active transistor RNG circuitry can include different RNG topologies that utilize active oscillations, charge, resistance, inductance, and capacitance values output by the one or more MEMS structures as an entropy source. In some examples, the one or more MEMS structures are designed to harvest environmental noise to "seed" nondeterminism in the RNG in a manner where the one or more MEMS structures cannot be biased by the environment such that the RNG becomes deterministic. In some examples, multiple MEMS structures have a tuning offset to ensure that redundant MEMS inputs have different points of resonance. In some examples, if an external bias is applied to the RNG circuit, then the RNG circuit can become heavily biased and produces a detectable, non-random output.

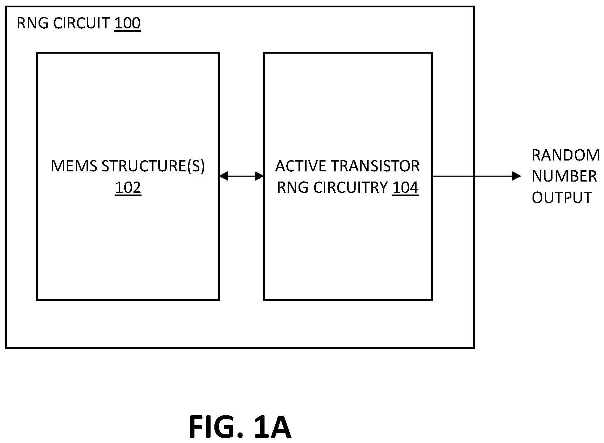

FIG. 1A is a block diagram of an example random number generator (RNG) circuit 100. In the example shown in FIG. 1A, the RNG circuit 100 is implemented using a combination of one or more MEMS structures 102 and active transistor RNG circuitry 104. In some examples, the RNG circuit 100 is an example implementation of the RNG circuitry described in copending application United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE."

In some examples, the one or more MEMS structures 102 includes a plurality of MEMS structures. In other examples, the one or more MEMS structures 102 includes a single MEMS structure. In general, a greater number of MEMS structures 102 increases the entropy of the RNG circuit 100 and improves performance of the RNG circuit 100, so the more MEMS structures 102 the better.

The one or more MEMS structures 102 may be any type of MEMS device such as an accelerometer, a gyroscope, a pressure sensor, a temperature sensor, airflow sensor, or other similar MEMS structures. When included in the RNG circuit 100, the one or more MEMS structures 102 can function as a further source of entropy for the active transistor RNG circuitry 104.

In some examples, the one or more MEMS structures 102 include one or more RNG MEMS structures are used exclusively for the RNG circuit 100. In other examples, the one or more MEMS structures 102 include one or more shared MEMS structures that are shared with another circuit (for example, a physical unclonable function (PUF) circuit). In some examples, the one or more MEMS structures 102 include both one or more RNG MEMS structures that are used exclusively for the RNG circuit 100 and one or more shared MEMS structures that are shared with another circuit.

The one or more MEMS structures 102 are configured to source entropy for the RNG circuit 100 by harvesting environmental noise and providing active oscillations, charge, resistance, inductance, and/or capacitance values to the active transistor RNG circuitry 104. In some examples, the one or more MEMS structures 102 are active components. In other examples, the one or more MEMS structures 102 are passive components.

The RNG circuit 100 generates a sequence of numbers or symbols that cannot be reasonably predicted better than by random chance or extracts randomness from physical phenomena to generate numbers (acts as a True RNG). In some examples, the one or more MEMS structures 102 act as an entropy source for the active transistor RNG circuitry 104, which includes a combination of a noise source, health tests, and an optional conditioning component that produce random bitstrings to be used by the active transistor RNG circuitry 104. The noise source is the component of an entropy source that contains the nondeterministic entropy-producing activity (for example, environmental noise, thermal noise, or hard drive seek times).

In some examples, the one or more MEMS structures 102 includes multiple MEMS structures 102, and the MEMS structures 102 are configured to have a tuning offset such that the different MEMS structures 102 have different points of resonance. This can help prevent the MEMS structures 102 from being biased by the environment and the RNG circuit 100 becoming deterministic because the MEMS structures 102 would be biased in different ways by the environment.

In some examples, the one or more MEMS structures 102 are configured to receive feedback from the active transistor RNG circuitry 104 to set the tuning of the one or more MEMS structures 102. In some examples, the one or more MEMS structures 102 are designed to resonate in a harmonious manner at different frequencies based on the feedback from the active transistor RNG circuitry 104. However, if external bias is introduced in the RNG circuit 100, the one or more MEMS structures 102 are configured to lock up to prevent an output that could pass as random. In some examples, the one or more MEMS structures 102 are configured to lock to each other and interfere such that the RNG circuit 100 would become heavily biased and generate an RNG output such as a periodic waveform, all zeros, or all ones in place of the random output. This measure can help to avoid the problem of a bad random output going undetected (for example, where the output produced by the RNG circuit 100 is non-random but passes for random).

In some examples, the components of the active transistor RNG circuitry 104 are implemented using a transistor-based integrated circuit. For example, the active transistor RNG circuitry 104 can be implemented in an application-specific integrated circuit (ASIC), field-programmable gate array (FPGA), or another type of integrated circuit.

In some examples, the active transistor RNG circuitry 104 can include, but is not limited to, circuitry that is configured to produce random number outputs. For example, if the active transistor RNG circuitry 104 is configured to implement a ring oscillator RNG, the active transistor RNG circuitry 104 can include, but is not limited to, an array of ring oscillator loops coupled to an exclusive or component (XOR), sampling circuitry, and the like.

In some examples, the active transistor RNG circuitry 104 is used exclusively for the RNG circuit 100. In other examples, at least some components of the active transistor RNG circuitry 104 of the RNG circuit 100 are shared with another circuit (for example, a physical unclonable function (PUF) circuit).

In some examples, the circuit connections between the one or more MEMS structures 102 and the active transistor RNG circuitry 104 enable the operation of the one or more MEMS structures 102 to be influenced by the active transistor RNG circuitry 104 and vice versa as shown in FIG. 1A using the bidirectional arrows between these components. The one or more MEMS structures 102 should affect the active transistor RNG circuitry 104 and the active transistor RNG circuitry 104 should affect the one or more MEMS structures 102 such that these components of the RNG circuit 100 are codependent. In some examples, a change to the one or more MEMS structures 102 or the active transistor RNG circuitry 104 results in a change to the RNG output from the RNG circuit 100. These features help to prevent a situation where the MEMS structures 102 could be removed, characterized, and replaced in order to spoof or modify operation of the RNG circuit 100 for nefarious purposes.

In the example shown in FIG. 1A, the RNG circuit 100 is configured to generate a random number output based on the output from the MEMS structures 102. In some examples, the RNG circuit 100 is configured to generate the random number output based on physical characteristics of the active transistor RNG circuitry 104 among other factors. The output of the active transistor RNG circuitry 104 is random and non-deterministic. In some examples, the output of the active transistor RNG circuitry 104 is affected over time due to aging or other factors. The active transistor RNG circuitry 104 can be configured to implement a variety of RNG architectures (for example, ring oscillator, etc.) and can include a variety of different electronic components.

In the example shown in FIG. 1A, the randomness of the random number output is impacted by the number of components (for example, more ring oscillator loops or MEMS structures), variation between the components (for example, different length ring oscillator loops or variation between similar MEMS structures), noise (for example, due to fabrication processes), etc. of the active transistor circuitry and the one or more MEMS structures. In general, the randomness of the random number output is increased by using the active oscillations, charge, resistance, inductance, and/or capacitance values output from the one or more MEMS structures 102 in addition to the active transistor RNG circuitry 104 compared to an RNG circuit that only includes active transistor circuitry.

In some examples, the RNG circuit 100 includes at least some shared active transistor circuitry that is shared with another circuit in addition to the active transistor RNG circuitry 104 that is exclusively used for the RNG circuit 100.

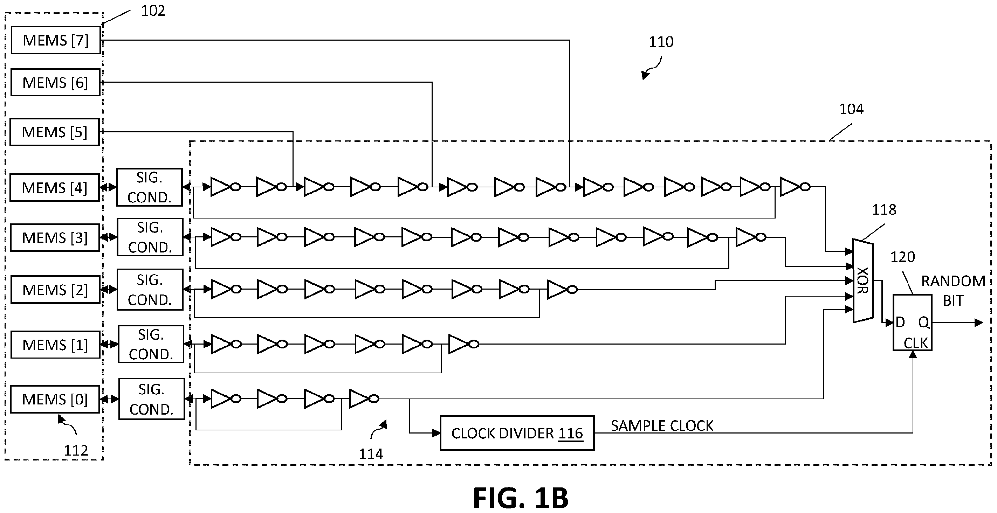

FIG. 1B is a block diagram of an example random number generator (RNG) circuit 110. In the example shown in FIG. 1B, the RNG circuit 110 is implemented using a combination of one or more MEMS structures 102 and active transistor RNG circuitry 104. In some examples, the RNG circuit 110 is an example implementation of the RNG circuitry as described in copending application United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE."

The example RNG circuit 110 shown in FIG. 1B is one specific example of the RNG circuit 100 described above with respect to FIG. 1A. In the example shown in FIG. 1B, the RNG circuit 110 implements a ring oscillator RNG topology. It should be understood that different topologies for the active transistor RNG circuitry 104 could also be used in combination with the one or more MEMS structures 102 to implement the RNG circuit 100.

In the example shown in FIG. 1B, the one or more MEMS structures 102 includes an array of MEMS structures 112. The MEMS structures 112 are configured to output active oscillations, charge, resistance, inductance, and/or capacitance values to ring oscillator loops 114. The MEMS structures 112 contribute additional entropy to the ring oscillator loops 114.

In the example shown in FIG. 1B, the active transistor RNG circuitry 104 includes an array of ring oscillator loops 114 that each have a different length (for example, by including a different number of inverter components in the loop), which guarantees that the frequency of the ring oscillator loops 114 are never the same. In the example shown in FIG. 1B, the frequency of each of the ring oscillator loops 114 is dependent on the loop delay and the active oscillations, charge, resistance, inductance, and/or capacitance values from the MEMS structures 112, which affect the rise and fall time of the inverter link. In the example shown in FIG. 1B, each of the ring oscillator loops 114 includes a specific number of inverters, but it should be understood that other odds numbers of inverters could also be used for the ring oscillator loops 114.

In the example shown in FIG. 1B, each of the MEMS structures 112 is coupled to a respective ring oscillator loop 114, and each ring oscillator loop 114 is coupled to at least one MEMS structure 112. In the example shown in FIG. 1B, four MEMS structures 112 are coupled to different points of the top ring oscillator loop 114. In some examples, more than one of the ring oscillator loops 114 has multiple MEMS structures 112 coupled to different points of the ring oscillator loop 114. The multiple MEMS structures 112 add active oscillations, charge, resistance, inductance, and/or capacitance values at different points in the ring oscillator loop 114.

In the example shown in FIG. 1B, some of the MEMS structures 112 are coupled to the ring oscillator loops 114 via a signal conditioning block. In some examples, the signal conditioning block is configured to perform one or more signal conditioning functions on signals communicated from the MEMS structure 112 to the ring oscillator loop 114 or from the ring oscillator loop 114 to the MEMS structure 112. In some examples, the signal conditioning block includes AC coupling circuitry, a voltage divider, and/or other circuitry. In some examples, the signal conditioning block is configured to perform level conversion, amplification, DC offset isolation (for example, using AC coupling), and/or other signal conditioning functions. In some examples, the signal conditioning block used to interface between a respective MEMS structure 112 and a respective ring oscillator loop 114 provides a unique interface between the respective MEMS structure 112 and the respective ring oscillator loop 114.

In some examples, the signal conditioning blocks are not needed for the RNG circuit 110, but the one or more MEMS structures 102, the active transistor RNG circuitry 104, and/or the signal conditioning blocks are shared by the RNG circuit 110 and a physical unclonable function (PUF) circuit. In such examples, the signal conditioning blocks can be disabled when shared circuitry is configured to operate in an RNG configuration.

In general, it is better to have more MEMS structures 112 coupled to each of the ring oscillator loops 114 to increase the active oscillations, charge, resistance, inductance, and capacitance effects from the MEMS structure 112 providing entropy to the ring oscillator loops 114. Also, it is better to have a larger number of ring oscillator loops 114 as this generally increases the entropy for the RNG circuit 100.

In the example shown in FIG. 1B, the active transistor RNG circuitry 104 of the RNG circuit 110 further includes an exclusive or (XOR) block 118 communicatively coupled to each of the ring oscillator loops 114 in the array of ring oscillator loops 114. The XOR block 118 outputs a signal with a varying frequency and duty cycle.

In the example shown in FIG. 1B, the active transistor RNG circuitry 104 of the RNG circuit 110 further includes sampling circuitry including a clock divider 116 coupled to the bottom ring oscillator loop 114 and a flip-flop 120. In some examples, the clock divider 116 can be coupled to a different ring oscillator loop 114. The clock divider 116 is configured to produce a sample clock signal that is provided to the flip-flop 120 and determines when the flip-flop 120 samples the signal output by the XOR block 118. In some examples, the clock divider 116 is configured to generate a sample clock signal having a relatively low frequency, which will result in under sampling of the signal output by the XOR block 118 and the sampled value being random. In general, the length of the clock divider 116 will improve the randomness of the output bit (random number output).

In some examples, the MEMS structures 112 are configured to have a tuning offset such that the different MEMS structures 112 have different points of resonance. This can help prevent the MEMS structures 112 from being biased by the environment and the RNG circuit 100 becoming deterministic because the MEMS structures 112 would be biased in different ways by the environment.

In some examples, the MEMS structures 112 are configured to receive feedback from the active transistor RNG circuitry 104 (for example, from the ring oscillator loops 114) to set the tuning of the MEMS structures 112. In some examples, the MEMS structures 112 are designed to resonate in a harmonious manner at different frequencies based on the feedback from respective ring oscillator loops 114 of the active transistor RNG circuitry 104. However, if external bias is introduced in the RNG circuit 110, the MEMS structures 112 are configured to lock up to prevent an output that could pass as random. In some examples, the MEMS structures 112 are configured to lock to each other and interfere such that the RNG circuit 110 would become heavily biased and generate an RNG output such as a periodic waveform, all zeros, or all ones in place of the random output. This measure can help to avoid the problem of a bad random output going undetected (for example, where the output produced by the RNG circuit 110 is non-random but passes for random.

While a particular number of MEMS structures 112 and ring oscillator loops 114 are shown in FIG. 1B, it should be understood that this is an example and a different number of MEMS structures 112 and/or ring oscillator loops 114 can be included in the RNG circuit 110 and a different configuration of the MEMS structures 112 and the ring oscillator loops 114 could be used to produce the random number output have sufficient nondeterminism.

While a single instance of the RNG circuit 100, 110 is shown in FIGS. 1A-1B, it should be understood that other configurations are also possible. For example, more than one instance of RNG circuit 100, 110 can be included in a single device or system. Further, the RNG circuit 100, 110 can be integrated into a larger device or system that includes additional circuitry beyond that shown for the RNG circuit 100, 110 for performing additional functions that utilize the random number output for cryptographic processes.

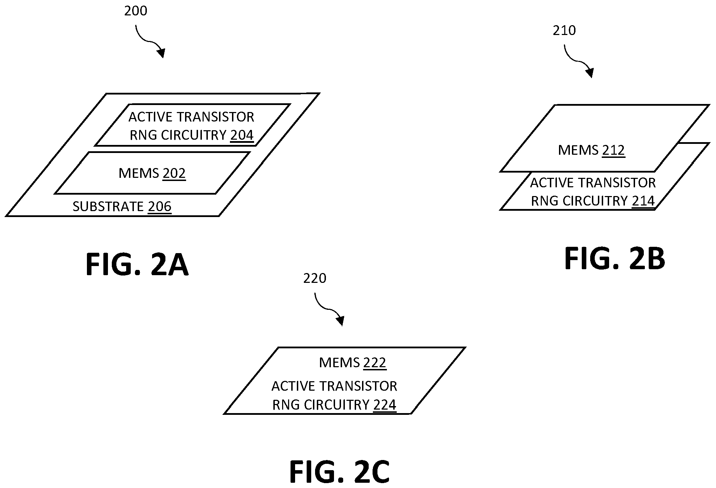

FIGS. 2A-2C are diagrams of example RNG circuits that include one or more MEMS structures and active transistor RNG circuitry produced using different fabrication techniques. The examples configurations of RNG circuits and fabrication techniques discussed with respect to FIGS. 2A-2C is not meant to be exhaustive. It should be understood that other configurations of RNG circuits that includes one or more MEMS structures and active transistor RNG circuitry could also be produced using other fabrications techniques.

FIG. 2A illustrates a diagram of an RNG circuit 200 that includes one or more MEMS structures 202 and active transistor RNG circuitry 204 and is produced using a first fabrication technique.

In the example shown in FIG. 2A, the one or more MEMS structures 202 are fabricated separately from the active transistor RNG circuitry 204 and connected to the active transistor RNG circuitry 204 using a substrate 206. In some examples, the one or more MEMS structures 202 and the active transistor RNG circuitry 204 can be fabricated on separate dies and then the one or more MEMS structures 202 and the active transistor RNG circuitry 204 are mounted on the substrate 206. In some examples, the one or more MEMS structures 202 are separately packaged from the active transistor RNG circuitry 204 and connected on a circuit board.

In order to connect the one or more MEMS structures 202 to the active transistor RNG circuitry 204, interconnects are used between the one or more MEMS structures 202 and the active transistor RNG circuitry 204. In some examples, it is beneficial to increase the length of the interconnects between the one or more MEMS structures 202 and the active transistor RNG circuitry 204 since longer interconnects introduce unpredictability to the RNG circuit 200. Therefore, in some implementations of the RNG circuit 200, the one or more MEMS structures 202 and the active transistor RNG circuitry 204 are positioned to be on opposite ends of the substrate 206.

FIG. 2B illustrates a diagram of a second RNG circuit 210 that includes one or more MEMS structures 212 and active transistor RNG circuitry 214 and is produced using a second fabrication technique.

In the example shown in FIG. 2B, the one or more MEMS structures 212 are fabricated separately from the active transistor RNG circuitry 214 and stacked on top of the active transistor RNG circuitry 214. In some examples, the one or more MEMS structures 212 and the active transistor RNG circuitry 214 can be fabricated on separate dies and then the one or more MEMS structures 212 are stacked on top of the active transistor RNG circuitry 214. In some examples, the one or more MEMS structures 212 are separately packaged from the active transistor RNG circuitry 214 and stacked on top of the active transistor RNG circuitry 214 (for example, on a circuit board).

In order to connect the one or more MEMS structures 212 to the active transistor RNG circuitry 214, vertical interconnects are used between the one or more MEMS structures 212 and the active transistor RNG circuitry 214. In general, vertical connections reduce the length of the interconnects between the one or more MEMS structures 212 and the active transistor RNG circuitry 214 compared to the interconnects used in FIG. 2A. When the one or more MEMS structures 212 are aligned with corresponding components of the active transistor RNG circuitry 214, the length of the interconnects is further reduced. Therefore, in some implementations of the second RNG circuit 210, the one or more MEMS structures 212 and the active transistor RNG circuitry 214 are stacked and aligned to increase the length of the vertical interconnects as much as possible. In some situations, vertical stacking of the one or more MEMS structures 212 and the active transistor RNG circuitry 214 can also provide improved resistance to physical tampering.

FIG. 2C illustrates a diagram of a third RNG circuit 220 that includes one or more MEMS structures 222 and active transistor RNG circuitry 224 and is produced using a third fabrication technique.

In the example shown in FIG. 2C, the one or more MEMS structures 222 are fabricated with the active transistor RNG circuitry 224. In some examples, the one or more MEMS structures 222 and the active transistor RNG circuitry 224 can be fabricated on the same die and then the one or more MEMS structures 202 are stacked on top of the active transistor RNG circuitry 204.

In order to connect the one or more MEMS structures 222 to the active transistor RNG circuitry 224, interconnects are used between the one or more MEMS structures 222 and the active transistor RNG circuitry 224. Since the one or more MEMS structures 222 and the active transistor RNG circuitry 224 are fabricated on the same die, the one or more MEMS structures 222 and the active transistor RNG circuitry 224 will generally be closer together. Thus, the length of the interconnects between the one or more MEMS structures 222 and the active transistor RNG circuitry 224 are likely to be shorter compared to the interconnects used in FIG. 2A. In some implementations of the third RNG circuit 220, the one or more MEMS structures 222 and the active transistor RNG circuitry 224 are positioned as far apart as feasible on the same die.

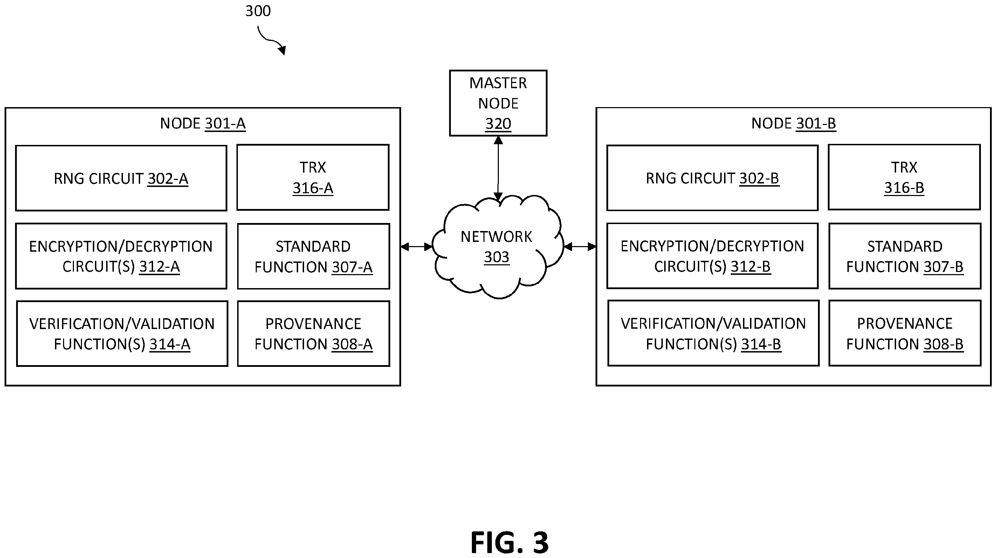

FIG. 3 is a block diagram of a system 300 that includes secure communication between nodes 301 in an exclusive community over a network 303 using a random component generated by RNG circuits 302 in the nodes 301. Examples of protocols for creating the random component from the RNG circuit 302 are described in more detail herein.

In the example shown in FIG. 3, system 300 is illustrated with two nodes 301 labelled as node 301-A and node 301-B. It is understood that the system 300 may include any appropriate number of nodes 301 and thus the system 300 is not limited to a system with two nodes 301. Further, FIG. 3 illustrates the node 301-A is coupled to the node 301-B over the network 303. It is understood that network 303 may comprise one or more of a wireless access point, comm link, wide area network (WAN), local area network (LAN) such as an Ethernet network, cable group, optical fiber, direct connection, or any other appropriate system for communicatively coupling nodes 301 of system 300.

In the example shown in FIG. 3, the node 301-A and the node 301-B each include similar components for secure communication in the system 300. Therefore, for simplicity and brevity, only the node 301-A is described in detail using reference numerals for each component followed by the designator "-A." It is understood that similar components are also included in the node 301-B identified by the same reference numeral followed by the designator "-B."

In the example shown in FIG. 3, the node 301-A includes an RNG circuit 302-A. In some examples, the RNG circuit 302-A can be implemented as RNG circuit 100 or RNG circuit 110 as discussed above with respect to FIGS. 1A-1B. In some examples, the RNG circuit 302-A supports two or more functions for the node 301-A by providing one or more outputs. In some examples, the outputs can include a standard component and a random component. In some examples, the random component includes a random number output as discussed above.

A first function supported by RNG circuit 302-A uses the standard component of the outputs from the RNG circuit 302-A. For example, the RNG circuit 302-A may comprise a sensor (for example, a MEMS sensor) and the standard component may be a measurement of acceleration, rotation rate, pressure, temperature, airflow, or other measurements associated with the sensor.

A second function supported by RNG circuit 302-A uses the random component for secure communication with other nodes 301 of system 300. In some examples, the RNG circuit 302-A generates the random component using one or more sources of entropy and process variations during fabrication that create random aspects to the RNG circuit 302-A. In some examples, the random component output by the RNG circuit 302-A can be derived from active transistor circuitry and/or one or more MEMS structures included in the RNG circuit 302-A.

In some examples, the node 301-A also includes one or more processors and memory for storing software or instructions to implement functions for node 301-A. In the example shown in FIG. 3, the node 301-A includes a standard function 307-A to support the first function of node 301-A. Standard function 307-A uses, among other things, the standard component of outputs of the RNG circuit 302-A such that node 301-A implements its standard function that is implemented based on outputs of RNG circuit 302-A.

Also, the node 301-A includes instructions or software to implement the second function of node 301-A. In the example shown in FIG. 3, the node 301-A includes provenance function 308-A, encryption/decryption circuit 312-A, and verification/validation function 314-A. In some examples, the RNG circuit 302-A is configured to output a random number from RNG circuitry, and the random number output is used in conjunction with the encryption/decryption circuit 312-A to send data securely over the network 303. In some examples, the node 301-A uses the provenance function 308-A in conjunction with verification/validation function 314-A to implement authentication that data received or transmitted by node 301-A is from an authorized node in system 300.

In the example shown in FIG. 3, the system 300 also includes a master node 320 that is used to set up the trusted relationship amongst the nodes 301 of system 300 that are in the exclusive community. The master node 320 is communicatively coupled to each of the nodes 301 via the network 303.

In some examples, each respective node 301 generates a number of registries (for example, thousands or tens of thousands of registries) using provenance function 308 and a unique component of outputs of MEMS structures of the RNG circuit 302-A or a PUF circuit (not shown) of the respective node 301. These registries uniquely identify the specific node 301 as part of the trusted system 300. The master node 320 obtains the registries generated by each node 301 (for example, at the time a node 301 is set up) and provides the registries to all other nodes 301 in system 300. These registries are stored as part of the provenance function 308 of each node 301 in the exclusive community and become, in effect, a library of authorized users in the exclusive community for system 300. By using these registry values, a given node 301 will only recognize data received from like-equipped nodes 301. When data is received over network 303, the receiving node 301 will use the registries in provenance function 308 along with verification/validation function 314 to authenticate the input as originating with an authorized user. For example, the receiving node 301 can verify that the node 301 sending the data has produced an output of a provenance function 308 that corresponds to one of the registries provided by the master node 320 and included in its own provenance function 308.

In other examples, the master node 320 is configured to operate as a certificate authority/certification authority (CA) for applications that use asymmetric cryptography. In such examples, the master node 320 is configured to issue digital certificates to the nodes 301 and the verification/validation function 314 uses the issued digital certificates to authenticate the input as originating with an authorized user.

In the example shown in FIG. 3, the node 301-A also includes a transceiver 316-A that provides an interface for communicating with other nodes 301, e.g., node 301-B, over network 303. While a single transceiver 316-A is shown in FIG. 3, it should be understood that the single transceiver 316-A could be replaced with separate and distinct transmitter and receiver components.

In various aspects, system elements, method steps, or examples described throughout this disclosure (such as the devices, system, or components thereof, for example) may be implemented on one or more computer systems including a central processing unit (CPU), graphics processing unit (GPU), field programmable gate array (FPGA), application specific integrated circuit (ASIC) and/or similar devices comprising hardware executing code to realize those elements, processes, or examples, said code stored on a non-transient data storage device. These devices include or function with software programs, firmware, or other computer readable instructions for carrying out various methods, process tasks, calculations, and control functions.

These instructions are typically stored on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk-Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The methods and techniques described here may be implemented, in part, in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs).

### EXAMPLE EMBODIMENTS

Example 1 includes a random number generator (RNG) circuit, comprising: one or more micro-electromechanical (MEMS) structures configured to provide an output, wherein the output includes active oscillations, charge, resistance, capacitance, and/or inductance values; and active transistor RNG circuitry communicatively coupled to the one or more MEMS structures; wherein the active transistor RNG circuitry is configured to generate a random number output based on the output provided by the one or more MEMS structures; wherein the random number output generated by the active transistor RNG circuitry is an output of the RNG circuit.

Example 2 includes the RNG circuit of Example 1, wherein the one or more MEMS structures and/or the active transistor RNG circuitry are used exclusively for the RNG circuit.

Example 3 includes the RNG circuit of any of Examples 1-2, wherein the one or more MEMS structures include multiple MEMS structures.

Example 4 includes the RNG circuit of Example 3, wherein the multiple MEMS structures are configured to have a tuning offset such that each of the multiple MEMS structures has a different point of resonance.

Example 5 includes the RNG circuit of any of Examples 3-4, wherein the multiple MEMS structures are configured to receive feedback from the active transistor RNG circuitry for tuning of the multiple MEMS structures.

Example 6 includes the RNG circuit of any of Examples 1-5, wherein, in response to external bias applied to the RNG circuit, the RNG circuit is configured to produce a detectable, non-random output.

Example 7 includes the RNG circuit of any of Examples 1-6, wherein the active transistor RNG circuitry is further configured to generate the random number output based on fabrication variation in components of the active transistor RNG circuitry.

Example 8 includes the RNG circuit of any of Examples 1-7, wherein the RNG circuit further comprises a respective signal conditioning circuit coupled between at least one MEMS structure of the one or more MEMS structures and the active transistor RNG circuitry.

Example 9 includes the RNG circuit of any of Examples 1-8, wherein the one or more MEMS structures are stacked on top of the active transistor RNG circuitry.

Example 10 includes the RNG circuit of any of Examples 1-9, wherein the one or more MEMS structures and the active transistor RNG circuitry are coupled using interconnects, wherein the one or more MEMS structures and the active transistor RNG circuitry are positioned on a same die or substrate.

Example 11 includes the RNG circuit of any of Examples 1-10, wherein the active transistor RNG circuitry includes a plurality of ring oscillator loops having different lengths, an exclusive or (XOR) block coupled to the plurality of ring oscillator loops, and sampling circuitry coupled to the XOR block.

Example 12 includes the RNG circuit of any of Examples 10-11, wherein more than one MEMS structure is coupled to at least one ring oscillator loop.

Example 13 includes the RNG circuit of any of Examples 1-12, wherein the active transistor RNG circuitry is communicatively coupled to the one or more MEMS structures using circuit connections that enable operation of the one or more MEMS structures to be influenced by the active transistor RNG circuitry and enable operation of the active transistor RNG circuitry to be influenced by the one or more MEMS structures.

Example 14 includes a device, comprising: a random number generator (RNG) circuit including: one or more micro-electromechanical (MEMS) structures configured to output active oscillations, charge, resistance, capacitance, and/or inductance values; and active transistor RNG circuitry communicatively coupled to the one or more MEMS structures, wherein the active transistor RNG circuitry is configured to generate a random number output of the RNG circuit based on the active oscillations, charge, resistance, inductance, and/or capacitance values output by the one or more MEMS structures; and one or more additional circuits configured to utilize the random number output for one or more cryptographic processes.

Example 15 includes the device of Example 14, wherein each of the one or more MEMS structures is configured to have a different point of resonance than other MEMS structures based on feedback from the active transistor RNG circuitry.

Example 16 includes the device of any of Examples 14-15, wherein, in response to external bias applied to the RNG circuit, the RNG circuit is configured to produce a detectable, non-random output.

Example 17 includes the device of any of Examples 14-16, wherein the active transistor RNG circuitry includes a plurality of ring oscillator loops having different lengths, an exclusive or (XOR) block coupled to the plurality of ring oscillator loops, and sampling circuitry coupled to the XOR block.

Example 18 includes the device of Example 17, wherein more than one MEMS structure is coupled to at least one of the ring oscillator loops.

Example 19 includes the device of any of Examples 14-18, wherein the active transistor RNG circuitry is further configured to generate the random number output based on fabrication variation in components of the active transistor RNG circuitry.

Example 20 includes a system, comprising: a plurality of devices configured to communicate with each other over a network, wherein each device of the plurality of devices includes: a random number generator (RNG) circuit, the RNG circuit including: micro-electromechanical (MEMS) structures configured to outputs, wherein the outputs include active oscillations, charge, resistance, capacitance, and/or inductance values; and active transistor RNG circuitry communicatively coupled to the MEMS structures, wherein the active transistor RNG circuitry is configured to generate a random number output for the RNG circuit based on the outputs by the MEMS structures; and one or more additional circuits configured to utilize the random number output for one or more cryptographic processes in communicating with other devices over the network.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A random number generator, RNG, circuit (100, 110, 200, 210, 220), comprising:
one or more micro-electromechanical, MEMS, structures configured to provide an output, wherein the output includes active oscillations, charge, resistance, capacitance, and/or inductance values; and
active transistor RNG circuitry (104) communicatively coupled to the one or more MEMS structures (102);
wherein the active transistor RNG circuitry (104) is configured to generate a random number output based on the output provided by the one or more MEMS structures (102);
wherein the random number output generated by the active transistor RNG circuitry (104) is an output of the RNG circuit (100, 110, 200, 210, 220).

2. The RNG circuit (100, 110, 200, 210, 220) of claim 1, wherein the one or more MEMS structures (102) and/or the active transistor RNG circuitry (104) are used exclusively for the RNG circuit.

3. The RNG circuit (100, 110, 200, 210, 220) of any of claims 1-2, wherein the one or more MEMS structures (102) include multiple MEMS structures, wherein the multiple MEMS structures are configured to have a tuning offset such that each of the multiple MEMS structures has a different point of resonance.

4. The RNG circuit (100, 110, 200, 210, 220) of any of claims 1-3, wherein the one or more MEMS structures (102) include multiple MEMS structures, wherein the multiple MEMS structures are configured to receive feedback from the active transistor RNG circuitry (104) for tuning of the multiple MEMS structures.

5. The RNG circuit (100, 110, 200, 210, 220) of any of claims 1-4, wherein, in response to external bias applied to the RNG circuit, the RNG circuit (100, 110, 200, 210, 220) is configured to produce a detectable, non-random output.

6. The RNG circuit (100, 110, 200, 210, 220) of any of claims 1-5, wherein the active transistor RNG circuitry (104) is further configured to generate the random number output based on fabrication variation in components of the active transistor RNG circuitry (104).

7. The RNG circuit (100, 110, 200, 210, 220) of any of claims 1-6, wherein the RNG circuit (100, 110, 200, 210, 220) further comprises a respective signal conditioning circuit coupled between at least one MEMS structure of the one or more MEMS structures (102) and the active transistor RNG circuitry (104).

8. The RNG circuit (100, 110, 210) of any of claims 1-7, wherein the one or more MEMS structures (102) are stacked on top of the active transistor RNG circuitry (104).

9. The RNG circuit (100, 110, 200, 220) of any of claims 1-7, wherein the one or more MEMS structures (102) and the active transistor RNG circuitry (104) are coupled using interconnects, wherein the one or more MEMS structures (102) and the active transistor RNG circuitry (104) are positioned on a same die or substrate.

10. The RNG circuit (100, 110, 200, 210, 220) of any of claims 1-9, wherein the active transistor RNG circuitry (104) is communicatively coupled to the one or more MEMS structures (102) using circuit connections that enable operation of the one or more MEMS structures (102) to be influenced by the active transistor RNG circuitry (104) and enable operation of the active transistor RNG circuitry (104) to be influenced by the one or more MEMS structures (102).
